# EUROPÄISCHE PATENTANMELDUNG

(11) **EP 1 619 566 A1**
(43) Veröffentlichungstag der Anmeldung: **25.01.2006**
(21) Anmeldenummer: 04017527.5
(22) Anmeldetag: 23.07.2004
(51) Int. Cl.: G05B 19/05

(54) **Verfahren zum Betrieb eines Automatisierungsgerätes**

(71) Anmelder: SIEMENS AKTIENGESELLSCHAFT, 80333 München (DE)
(72) Erfinder: Becker, Peter, 76571 Gaggenau (DE); Sand, Manfred, 77815 Bühl (DE)

(57) **Zusammenfassung**

Es wird ein Verfahren zum Betrieb eines Automatisierungsgerätes angegeben, bei dem während der Abarbeitung eines Anwenderprogramms, das eine Mehrzahl von Operationsbausteinen, darunter einen zentralen Operationsbaustein, umfasst, in einen Tracepuffer (10) beim Beginn und beim Ende jeder Unterbrechung des zentralen Operationsbausteins der Zeitstempel (14) und eine Ereigniskennziffer (13) eingetragen werden, wobei die Ereigniskennziffer (13) das Ereignis, das die Ausführung des zentralen Operationsbausteins unterbricht, kennzeichnet, so dass anhand der Daten im Tracepuffer (10) eine vollständige Rekonstruktion des Eintretens und der Dauer von Unterbrechungsereignissen möglich ist, wobei diese Daten für eine Visualisierung graphisch aufbereitet werden, so dass schnell erfassbar ist, aus welchem Grund Ausnahmesituationen bei der Abarbeitung des Anwenderprogramms, wie z. B. eine Zykluszeitüberschreitung, auftreten.

## Beschreibung

Die Erfindung betrifft ein Verfahren zum Betrieb eines Automatisierungsgerätes.

Automatisierungssysteme oder darin zusammengefasste einzelne oder mehrere Automatisierungsgeräte bearbeiten ihre Steuerungsaufgabe durch ein Zusammenspiel einer Mehrzahl von Operationsbausteinen, die je für sich einen Programmcode umfassen, der beim Aufruf des jeweiligen Operationsbausteins zur Anwendung kommt. Die Gesamtheit der Operationsbausteine sowie evtl. weitere Bausteine, z. B. Datenbausteine und Funktionsblöcke, wird im Folgenden zusammenfassend als Anwenderprogramm bezeichnet. Das Zusammenspiel der Operationsbausteine ist einerseits durch eine Aufrufreihenfolge und andererseits durch eine jedem Operationsbaustein zugewiesene Priorität bestimmt. Unter den Operationsbausteinen (OB) gibt es einen zentralen Operationsbaustein (OB1), der durch andere Operationsbausteine, die durch Ereignisse, z. B. Zeitereignisse oder Alarmereignisse des zu steuernden Prozesses, gestartet werden und den zentralen Operationsbaustein (OB1) in seiner Bearbeitung unterbrechen. Es können aber auch andere Funktionen, auf die der Anwender durch Projektierung Einfluss hat, z. B. Kommunikationsbelastung der Steuerung, den zentralen Operationsbaustein (OB1) unterbrechen. Der zentrale Operationsbaustein wird zyklisch ausgeführt, d. h., nach Abarbeitung der letzten Programmcodeanweisung des zentralen Operationsbausteins wird unmittelbar oder nach Ablauf einer vorgegebenen oder vorgebbaren Zeitspanne zur ersten Programmcodeanweisung des zentralen Operationsbausteins verzweigt und der Programmcode des zentralen Operationsbausteins erneut ausgeführt. Die Zeit zwischen einer ersten und einer unmittelbar folgenden zweiten Ausführung der ersten Programmcodeanweisung des zentralen Operationsbausteins wird auch als Zykluszeit, die Bearbeitungszeit des OB1 ohne die Unterbrechungszeit als Grundzyklus, bezeichnet.

Lastet ein Anwender ein Automatisierungsgerät weitestgehend mit seiner Steuerungsaufgabe aus, kann es zu einer Überschreitung einer maximal zulässigen Zykluszeit kommen. Die Überschreitung der maximal zulässigen Zykluszeit ergibt sich z. B. dadurch, dass Ereignisse, insbesondere zyklische Ereignisse, z. B. sog. Weckalarme, oder azyklische Ereignisse, z. B. sog. Alarmereignisse, den Grundzyklus bei der Ausführung des zentralen Operationsbausteins unterbrechen und entsprechend dessen Zykluszeit erhöhen. Bei einer Zykluszeitüberschreitung treten Unterbrechungen des Grundzyklus in einem solchen Maß auf, dass der zentrale Operationsbaustein nicht innerhalb der vorgegebenen Zeit abgearbeitet werden kann.

Ausnahmesituationen wie z. B. eine Zykluszeitüberschreitung sind nachteilig, weil sie für den gesteuerten und/oder überwachten technischen Prozess zu nicht mehr handhabbaren Konstellationen, z. B. bei einer grundsätzlichen Instabilität des Prozesses, führen können, und für den Anwender kaum analysierbar.

Zur Analyse der Zeitpunkte der Unterbrechung der Ausführung des zentralen Operationsbausteins steht heute zumindest bei den Automatisierungsgeräten der Anmelderin ein spezieller Diagnosepuffer, der im Folgenden auch als Tracepuffer bezeichnet wird, zur Verfügung, in dem die Zeitpunkte der Unterbrechung der Ausführung des zentralen Operationsbausteins aufgezeichnet werden. Anhand der Aufzeichnung der Unterbrechungszeitpunkte ist allerdings keine direkte Ableitung der Dauer der Unterbrechung möglich, weil zwar für den Start der Unterbrechung ein Eintrag (Zeitstempel) in dem Diagnosepuffer existiert, nicht aber für das Ende der Unterbrechung. Wird ein Operationsbaustein, der die Abarbeitung des zentralen Operationsbausteins unterbricht, selbst während seiner Ausführung durch weitere Operationsbausteine unterbrochen, so kann die Bearbeitungsdauer der Restbearbeitung des unterbrochenen Operationsbausteins nicht mehr bestimmt werden.

Bei nur sporadisch auftretenden Zykluszeitüberschreitungen ist selbst bei Kenntnis der Bearbeitungsdauer der einzelnen Operationsbausteine eine zielgerichtete Analyse nicht möglich. Zudem ist der Diagnosepuffer als Umlaufpuffer organisiert, so dass alte Einträge nach einer gewissen Zeit überschrieben werden und entsprechend für eine Auswertung nicht zur Verfügung stehen.

Zumindest bei den Automatisierungsgeräten der Anmelderin stehen dem Anwender heute statistische Werte, wie z. B. Minimal- oder Maximalwerte der Zykluszeit und/oder Mittelwerte der Zykluszeit, zur Verfügung, die für eine zielgerichtete Analyse aber ebenfalls nicht verwendbar sind, weil anhand solcher statistischer Werte z. B. nicht erkennbar ist, welche Konstellation bei der Abarbeitung der jeweiligen Operationsbausteine zu den ermittelten Minimal- und Maximalwerten der Zykluszeit geführt hat.

Konkret stellt sich die Situation für einen Anwender eines Automatisierungsgerätes im Falle einer Überschreitung einer vorgebbaren oder vorgegebenen maximalen Zykluszeit des Grundzyklus oder anderer vorgegebener zeitabhängiger Aktionen, wie z. B. eine Weckalarmüberschreitung - im Folgenden zusammenfassend als "Zeitüberschreitung" bezeichnet -, wie folgt dar:
Es erfolgt eine Analyse
   - der statistisch ermittelten Werte des Grundzyklus anhand einer sog. Baugruppendiagnose,
   - des Diagnosepuffers, in dem der Start einzelner Ablaufebenen, nicht aber deren Laufzeit eingetragen ist,
   - des Anwenderprogramms im Hinblick auf dessen Laufzeit,
   - der Projektierung insbesondere im Hinblick auf Weckalarme, das Auslesen und das Zurückschreiben des sog. Prozessabbilds sowie einzelne Kommunikationsfunktionen und
   - des Prozesses, also der zu steuernden Anlage.

Ziel dieser umfangreichen und zeitaufwendigen Analyse ist es, den Ablauf der Prozessverarbeitung durch das Automatisierungsgerät zu rekonstruieren und dabei einen Unterschied zwischen geplantem und realem Verhalten zu ermitteln. Bei einer solchen Analyse gilt es festzustellen, welche Ereignisse wann und wie lange den Grundzyklus verlängert oder den Start eines Weckalarms verzögert haben. In dieser Hinsicht wird der Anwender heute durch das Automatisierungsgerät und dessen Betriebssoftware nur bedingt unterstützt. Für den Anwender sind also die Abläufe bei der Ausführung seines Steuerungsprogramms nicht bis in sämtliche Details transparent.

Der Aufwand dieser Analyse steigt nichtlinear mit der Komplexität der Steuerung und/oder des Anwenderprogramms und/oder des jeweiligen Prozesses. Eine besondere Situation liegt vor, wenn die Zeitüberschreitung nur sporadisch auftritt, weil dann die statistisch ermittelten Zeitwerte kaum Rückschlüsse im Hinblick auf die Ursache der jeweiligen Zeitüberschreitung zulassen. Häufig kommt es zudem vor, dass Einträge in dem als Umlaufpuffer organisierten Diagnosepuffer bereits überschrieben sind und damit für eine Analyse nicht mehr zur Verfügung stehen.

Insgesamt ist zu den momentan gegebenen Analysemöglichkeiten festzustellen, dass der Anwender zwar die Möglichkeit hat, auf einzelne Parameter Einfluss zu nehmen, dies jedoch nur sehr bedingt zielgerichtet möglich ist. Der Anwender kann z. B. die Aufrufzeitpunkte eines Operationsbausteins verändern und so einen veränderten Ablauf bei der Unterbrechung des zentralen Operationsbausteins erzwingen. Wenn durch solche oder ähnliche Maßnahmen die beobachteten Zeitüberschreitungen vermieden werden, ist zunächst der sichere Betrieb des Automatisierungsgerätes gewährleistet. Häufig führen solche Maßnahmen jedoch nicht zu dem gewünschten Erfolg. Der Anwender weiß auch nicht, inwieweit mehrere solche Maßnahmen sich gegenseitig beeinflussen und den gewünschten Erfolg insgesamt in Frage stellen. Die bekannten Einflussmöglichkeiten beschränken sich damit auf Maßnahmen nach dem "trail and error"-Prinzip.

Die Aufgabe der Erfindung besteht folglich darin, ein Verfahren anzugeben, mit dem eine solche Analyse möglich oder zumindest vereinfacht wird.

Diese Aufgabe wird erfindungsgemäß mit den Merkmalen des Anspruchs 1 gelöst. Dazu ist bei einem Verfahren zum Betrieb eines Automatisierungsgerätes, bei dem während der Abarbeitung eines Anwenderprogramms, das eine Mehrzahl von Operationsbausteinen, darunter einem zentralen Operationsbaustein, umfasst, in einem Diagnose- oder Tracepuffer für jede Unterbrechung des zentralen Operationsbausteins ein Zeitstempel eingetragen wird, vorgesehen, dass in den Tracepuffer sowohl beim Beginn als auch beim Ende einer jeden Unterbrechung des zentralen Operationsbausteins der Zeitstempel und zusätzlich eine Ereigniskennziffer, die das Ereignis, das die Ausführung des zentralen Operationsbausteins unterbricht, kennzeichnet, eingetragen werden.

Dadurch, dass neben dem bisher bereits erfassten Beginn der Unterbrechung zusätzlich auch das Ende der Unterbrechung in dem Tracepuffer festgehalten wird, ist die Dauer der jeweiligen Unterbrechung ermittelbar. Ausschließlich die Daten hinsichtlich des Beginns und des Endes der Unterbrechung sind für die Ermittlung der Unterbrechungsdauer aber nur dann ausreichend, wenn das Ereignis, z. B. der Aufruf eines weiteren Operationsbausteins, das die Ausführung des zentralen Operationsbausteins unterbrochen hat (Unterbrechungsereignis), nicht selbst auch unterbrochen wird oder unterbrechbar ist. Üblicherweise sind aber solche Unterbrechungsereignisse durch weitere Unterbrechungsereignisse selbst auch unterbrechbar. Um bei einer Unterbrechung des Unterbrechungsereignisses noch dessen Zeitstempel im Tracepuffer identifizieren zu können, ist vorgesehen, dass mit jedem Zeitstempel eine Kennziffer in den Tracepuffer geschrieben wird. Diese Kennziffer kennzeichnet das jeweilige Unterbrechungsereignis, also insbesondere das Ereignis, das die Ausführung des zentralen Operationsbausteins unterbricht. Anhand der Kennziffer sind zusammengehörige Zeitstempel also jederzeit identifizierbar, so dass die tatsächliche Dauer der Unterbrechung der Ausführung des zentralen Operationsbausteins durch das Unterbrechungsereignis ermittelbar ist.

Anspruch 1 löst die oben genannte Aufgabe also, indem das Automatisierungsgerät in dem Tracepuffer alle Ereignisse erfasst, die der Anwender durch seine Programmierung und Projektierung beeinflussen kann. Hierzu wird die chronologische Reihenfolge von Unterbrechungsereignissen und deren Dauer (Bearbeitungszeit) in geeigneter Weise aufgezeichnet. Unterbrechungsereignisse sind dabei nicht nur Unterbrechungen des zentralen Operationsbausteins durch den Aufruf eines weiteren Operationsbausteins, sondern auch evtl. Unterbrechungen solcher Operationsbausteine, z. B. aufgrund von Unterbrechungen der Ereignisbearbeitung durch höher priore Ereignisse.

Es entsteht somit eine Aufzeichnung (Trace) sämtlicher relevanter Vorgänge. Eine Visualisierung dieser Information erlaubt dem Anwender eine einfache Verfolgung der Bearbeitung einzelner Ereignisse sowie evtl. weiterer Unterbrechungen.

Der Anwender kann auf diese Weise die Auswirkungen von Maßnahmen der oben beschriebenen Art direkt erkennen und seine Maßnahmen aufgrund der mit dem erfindungsgemäßen Verfahren möglichen Unterstützung zielgerichtet auswählen. Es ergibt sich gleichsam ein geschlossener Regelkreis für eine Optimierung des Zeitverhaltens des Anwenderprogramms oder für eine Fehlerbehebung im Zusammenhang mit Zeitüberschreitungen.

Der Vorteil der Erfindung besteht in dem gesteigerten Nutzen für den Anwender. Dieser wird hinsichtlich Aufwand und Kosten sowohl bei der Inbetriebnahme als auch bei der Programmpflege oder Programmerweiterung oder im Falle von Störungen entlastet. Mit den hier beschriebenen Mechanismen steht ein Werkzeug zur Verfügung, das es dem Anwender erlaubt, seine Anlage systematisch zu optimieren. Mit der erfindungsgemäßen Lösung können zum ersten Mal in der Automatisierungstechnik
- der tatsächliche Ablauf der Bearbeitung aller Ereignisse in der Steuerung beobachtet werden, auf die der Anwender durch Programmierung und Projektierung Einfluss hat,
- der "Regelkreis" (veränderte Programmierung/Projektierung ⇒ verändertes Verhalten der Steuerung) geschlossen werden,
- sporadisch auftretende Ereignisse festgehalten und qualifiziert analysiert werden.

Für den Anwender wird mit diesen Möglichkeiten seine Steuerung transparenter und damit sein Prozess deutlich besser beherrschbar. Er ist nun in der Lage, zielgerichtet seine Steuerung und auch seinen Prozess zu optimieren.

Vorteilhafte Ausgestaltungen der Erfindung sind Gegenstand der Unteransprüche.

Vorteilhaft ist zur Auswertung des Inhalts des Tracepuffers ein Tracestack mit einer Anzahl von Stackelementen vorgesehen. Die Datenstruktur des Stacks (Stapel) eignet sich besonders gut, um die Daten im Tracepuffer auszuwerten. Im Tracepuffer liegen z. B. bei einem ersten Unterbrechungsereignis, das die Ausführung des zentralen Operationsbausteins unterbricht, das selbst durch ein zweites Unterbrechungsereignis unterbrochen wird, welches wiederum durch ein drittes Unterbrechungsereignis unterbrochen wird, nacheinander drei Einträge zum Beginn und dann drei Einträge zum Ende eines Unterbrechungsereignisses vor, insgesamt also sechs Einträge. Der erste und der sechste Eintrag gehören zum oben genannten ersten Unterbrechungsereignis. Der zweite und der fünfte Eintrag gehören zum oben genannten zweiten Unterbrechungsereignis. Der dritte und der vierte Eintrag gehören schließlich zum dritten Unterbrechungsereignis. Zur Auswertung der Dauer des ersten Unterbrechungsereignisses ist aber die sukzessive Auswertung sämtlicher sechs Einträge erforderlich. Dies ist mit einer als Stack organisierten Datenstruktur besonders gut möglich, weil zusammengehörige Daten (erster und sechster Eintrag, zweiter und fünfter Eintrag sowie dritter und vierter Eintrag) in jeweils einem Stackelement gehandhabt werden können.

Zur Referenzierung eines jeweils aktuellen Stackelements des Tracestacks ist ein Stackzeiger vorgesehen. Bei der Auswertung des Inhalts des Tracepuffers wird beim Erkennen des Starts eines Unterbrechungsereignisses der Zeitstempel aus dem Tracepuffer für das aktuelle Stackelement und nach Inkrementieren des Stackzeigers für das nachfolgende Stackelement verwendet. Weiter wird bei der Auswertung des Inhalts des Tracepuffers beim Erkennen des Endes eines Unterbrechungsereignisses der Zeitstempel aus dem Tracepuffer für das aktuelle Stackelement zur Ermittlung der Dauer des Unterbrechungsereignisses, dessen Ende im Tracepuffer erkannt wurde, verwendet.

Beim Erkennen des Starts eines Unterbrechungsereignisses wird der Zeitstempel aus dem Tracepuffer vorteilhaft in eine dem aktuellen Stackelement zugeordnete Variable zur Protokollierung des Unterbrechungszeitpunkts - Unterbrechungszeitstempel (break_time_stamp) - und nach Inkrementieren des Stackzeigers für das nachfolgende Stackelement in eine Variable zur Protokollierung des Startzeitpunkts des Unterbrechungsereignisses - Startzeitstempel (start_time_stamp) - übertragen.

Beim Erkennen des Endes eines Unterbrechungsereignisses wird der Zeitstempel aus dem Tracepuffer vorteilhaft vom Startzeitstempel des aktuellen Stackelements subtrahiert. Diese Subtraktion ergibt die Dauer des Unterbrechungsereignisses, das zu dem erkannten Ende des Unterbrechungsereignisses gehört, sofern das Unterbrechungsereignis nicht selbst unterbrochen worden ist.

Für den Fall, dass das Unterbrechungsereignis selbst unterbrochen wird oder unterbrechbar ist, ist weiter vorteilhaft vorgesehen, dass beim Erkennen des Starts eines Unterbrechungsereignisses im jeweiligen Stackelement eine Variable zur Protokollierung der Gesamtdauer des Unterbrechungsereignisses (break_time) initialisiert, also insbesondere mit dem Wert "0" vorbesetzt wird. Der jeweilige Inhalt dieser Variablen wird bei der oben genannten Subtraktion berücksichtigt, denn der Inhalt dieser Variablen repräsentiert die Dauer, während der das jeweilige Ereignis unterbrochen war.

Um diese Unterbrechungsdauer zu ermitteln, ist weiter vorteilhaft vorgesehen, dass nach der oder jeder Subtraktion, wie oben beschrieben, der Stackzeiger dekrementiert wird und bezüglich des dann durch den Stackzeiger referenzierten Stackelements zum Inhalt der Variablen zur Protokollierung der Gesamtdauer des Unterbrechungsereignisses (break_time) die Differenz zwischen dem Startzeitstempel (start_time_stamp) und dem Zeitstempel im Tracepuffer addiert wird.

Vorteilhaft ist vorgesehen, dass der Anwender in der Lage ist, Beginn, Dauer und Ende der Traceaufzeichnung mittels einer Triggerbedingung und/oder einem oder mehreren Triggerkriterien festzulegen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen:
- FIG 1: eine Darstellung eines Tracepuffers mit exemplarischen Inhalten, wie sie sich bei einer Traceaufzeichnung ergeben,
- FIG 2: das Layout einer Kennziffer, die zur eindeutigen Kennzeichnung von Unterbrechungsereignissen verwendet wird und entsprechend als Ereigniskennziffer bezeichnet wird,
- FIG 3: eine Liste von Ereigniskennziffern und deren Funktionalität,
- FIG 4: eine bei der Auswertung des Inhalts des Tracepuffers verwendete Datenstruktur, die wegen ihrer Verwendung im Tracestack als Stackelement bezeichnet wird,
- FIG 5: ein Feld mehrerer Stackelemente in Form eines Stapels (stack), das entsprechend als Tracestack bezeichnet wird,
- FIG 6: ein Struktogramm,
- FIG 7: eine schematische Darstellung eines Anwenderbausteins zur Durchführung des erfindungsgemäßen Verfahrens,
- FIG 8: eine Tabelle mit Triggerbedingungen,
- FIG 9: eine Tabelle mit Triggerkriterien,
- FIG 10: eine Tabelle mit zur Umsetzung der Triggerfunktionalität notwendigen Daten,
- FIGen 11 bis 16: verschiedene Struktogramme und
- FIG 17: eine exemplarische Darstellung einer Visualisierung als Ergebnis einer Auswertung des Tracepuffers.

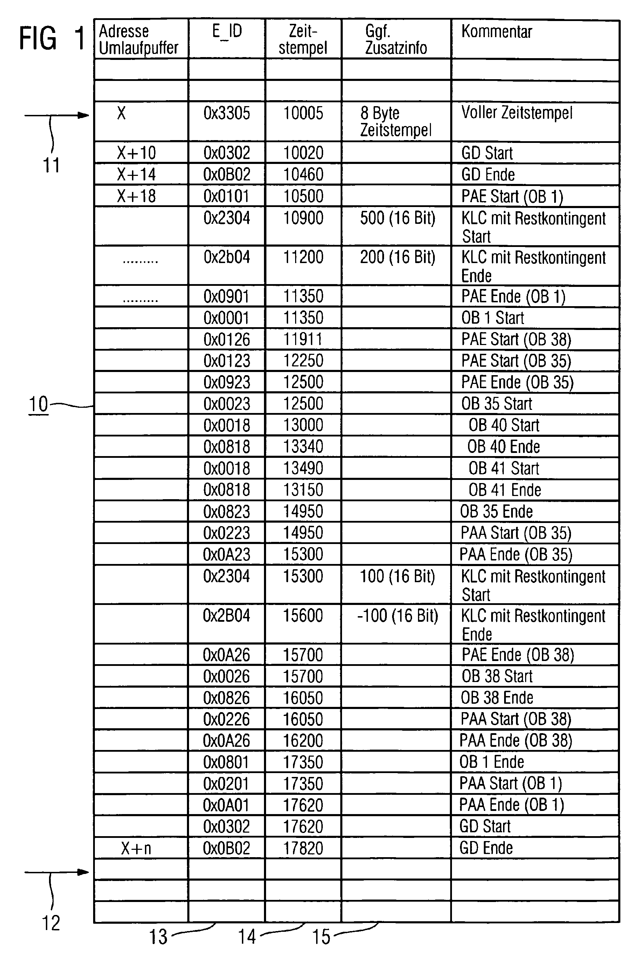

Als Information über einzelne Unterbrechungsereignisse wird deren Start und deren Ende festgehalten. Der Beginn (Start) der Unterbrechung wird als Startereignis bezeichnet. Das Ende der Unterbrechung wird als Endereignis bezeichnet. Das Start- und später das Endereignis wird als Ereignisinformation aufgezeichnet und in einem insbesondere als Umlaufpuffer organisierten Tracepuffer 10 gespeichert, wie er exemplarisch in FIG 1 dargestellt ist. Die Ereignisinformation ist über eine dafür vorgesehene Kommunikationsfunktion aus dem Tracepuffer 10 auslesbar. Ein gültiger Bereich des Tracepuffers 10 wird durch einen Lesezeiger 11 und einen Schreibzeiger 12 definiert. Für jedes Ereignis (Start- oder Endereignis) werden zumindest eine Ereigniskennziffer 13 und ein Zeitstempel 14 gespeichert. Die Ereigniskennziffer 13 dient zur eindeutigen Referenzierung der jeweiligen Start- und Endereignisse. Wenn die Ereignisse sich nicht selbst unterbrechen, ist es nicht nötig, unterschiedliche Ereigniskennziffern 13 für zu einem Unterbrechungsereignis gehörende Start- und Endereignisse vorzusehen. Dann referenziert die Ereigniskennziffer 13 das Unterbrechungsereignis selbst. Mit jeder Ereigniskennziffer 13 wird die im Anschluss an die Ereigniskennziffer 13 im Tracepuffer 10 folgende Datenstruktur für evtl. Zusatzinformationen 15 festgelegt.

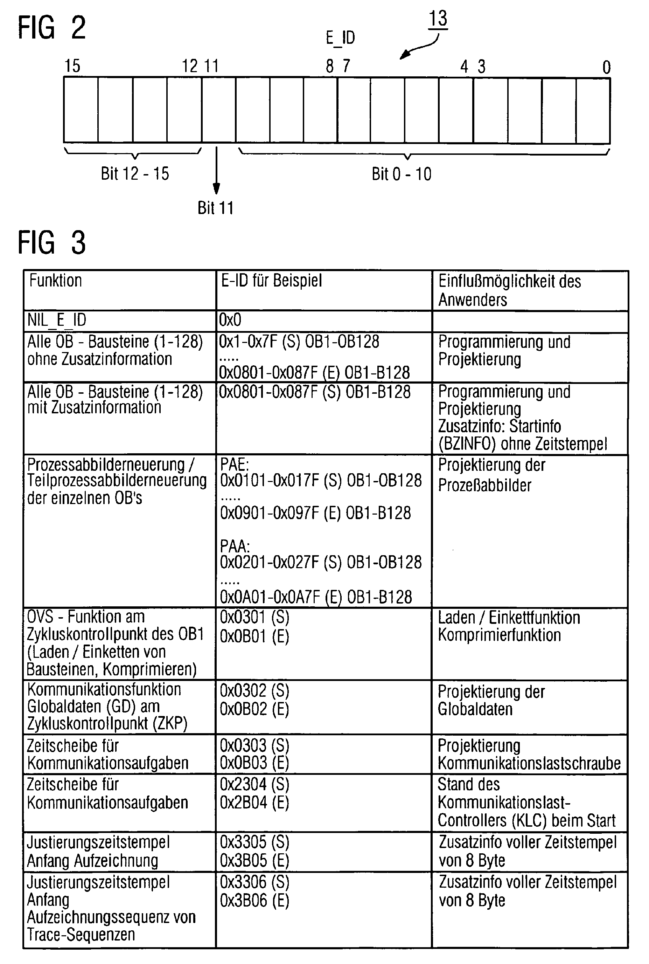

Die Ereigniskennziffer 13 hat ein spezielles Format, das in FIG 2 dargestellt ist. Nach diesem speziellen Format belegt die Ereigniskennziffer im Tracepuffer 10 einen Speicherplatz von 16 Bit, von denen die Bits 0-10 für eine Ereignisnummer belegt sind. Das Bit 11 kennzeichnet, ob es sich um ein Startereignis (Bit 11 = "0") oder um ein Endereignis (Bit 11 = "1") handelt. Die Bits 12-15 werden als Formatbezeichner verwendet. Ein zahlenmäßiger Wert der Bits 12-15 von "0" bedeutet z. B., dass der entsprechende Eintrag im Tracepuffer 10 eine Ereigniskennziffer 13 und einen Zeitstempel 14 umfasst. Ein zahlenmäßiger Wert der Bits 12-15 von "1" bedeutet z. B., dass der entsprechende Eintrag im Tracepuffer 10 ein Startereignis eines Operationsbausteins enthält. Ein zahlenmäßiger Wert der Bits 12-15 von "2" bedeutet z. B., dass der entsprechende Eintrag im Tracepuffer 10 eine Restzeit des Kommunikationslastcontrollers umfasst, und ein zahlenmäßiger Wert der Bits 12-15 von "3" bedeutet z. B., dass der entsprechende Eintrag im Tracepuffer 10 einen erweiterten Zeitstempel (8 Byte) mit Zusatzinformationen (Jahr, Monat, Tag, Sekunden, Millisekunden) umfasst.

In FIG 3 ist exemplarisch eine Liste von Ereigniskennziffern 13 und deren Funktion dargestellt.

Der Zeitstempel 14 wird zu jedem Start- oder Endereignis in den Tracepuffer 10 eingetragen (vgl. FIG 1). Häufig reicht als Datenstruktur für den Zeitstempel 14 im Tracepuffer 10 ein sog. Langwort (4 Byte / 32 Bit) aus. Dies insbesondere dann, wenn der Zeitstempel 14 sich auf eine Mikrosekunden-Zeitzelle bezieht, da in der Praxis die betrachteten Ereignisse nicht mehr als 4294,967296 Sekunden (= ca. 70 Minuten) auseinander liegen. Mit dem Start der Traceaufzeichnung wird bevorzugt der erweiterte Zeitstempel in den Tracepuffer 10 eingetragen, um die Zeitbasis der Traceaufzeichnung zu definieren.

Neben der Ereigniskennziffer 13 und dem Zeitstempel 14 können im Tracepuffer 10 auch noch Zusatzinformationen 15 aufgezeichnet werden, z. B. eine spezielle Startinformation oder der Stand des Kommunikationslastcontrollers. Die Datenstruktur der Zusatzinformation 15 wird durch die Ereigniskennziffer 13 festgelegt. Da solche Zusatzinformationen 15 die Speichertiefe der Traceaufzeichnung stark beeinflussen, kann deren Aufzeichnung an- oder abgeschaltet werden.

Zum Beschreiben des Tracepuffers 10 wird der Schreibzeiger 12 verwendet. Nach dem Schreiben wird der Schreibzeiger 12 um genau einen Eintrag im Tracepuffer 10 weitergeschaltet. Ist die Speicherkapazität des Tracepuffers 10 erschöpft, werden die ältesten Daten überschrieben. Das Auslesen des Tracepuffers erfolgt mittels des Lesezeigers 11. Das Auslesen ist auf den Bereich zwischen Lese- und Schreibzeiger 11, 12 beschränkt. Der Inhalt des Tracepuffers 10 wird auch als Traceaufzeichnung bezeichnet.

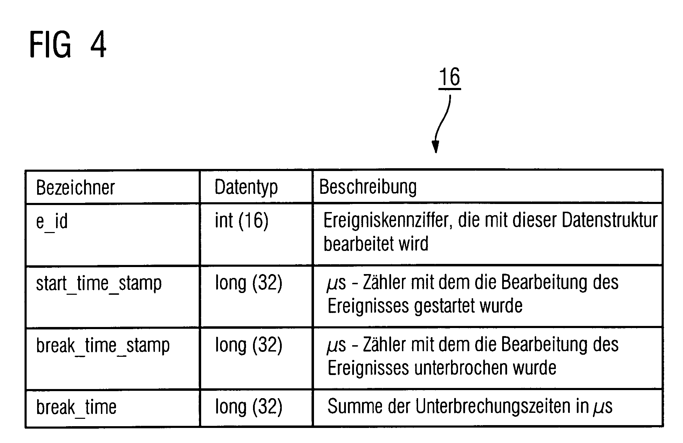

Die Auswertung der Traceaufzeichnung, insbesondere die Ermittlung der Laufzeit der einzelnen Ereignisse, erfolgt mittels einer Stackbearbeitung. Dies hat sich als vorteilhaft herausgestellt, weil die einzelnen Ereignisse ineinander verschachtelt sind. Zur Stackbearbeitung ist die in FIG 4 dargestellte Datenstruktur vorgesehen.

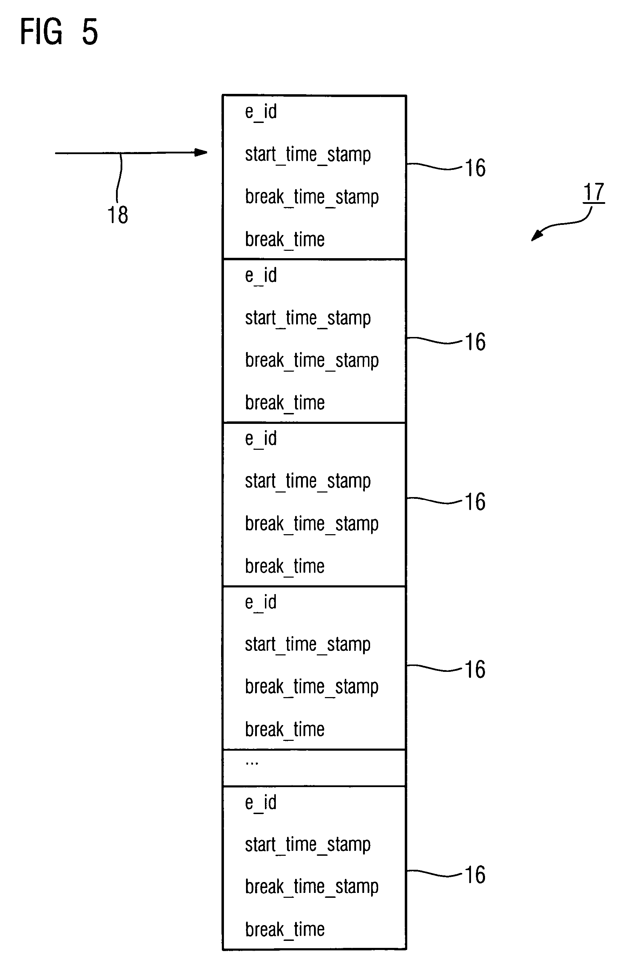

Eine Instanz dieser Datenstruktur wird als Stackelement 16 bezeichnet. Zur Analyse der Steuerungssoftware wird als Tracestack 17 ein Feld (array) solcher Stackelemente 16 angelegt. Der Tracestack 17 weist eine auf die maximale Anzahl ineinander verschachtelter Unterbrechungen abgestimmte Feldanzahl auf und ist exemplarisch in FIG 5 dargestellt. Es ergibt sich z. B. das dargestellte Feld der Stackelemente 16, wobei ein Stackzeiger 18 das jeweils aktuelle Stackelement 16 referenziert.

Eine Bearbeitung des Tracestacks 17 erfolgt nur mit solchen Startereignissen, denen ein Endereignis zugeordnet ist, also bei einem Startereignis, für das ein zugehöriges Endereignis vorhanden ist. Dies sind alle Ereignisse außer "NIL_E_ID" und "Justierzeitstempel" (vgl. FIG 3). Bei diesen Startereignissen wird der jeweilige Zeitstempel 14 für die Visualisierung übernommen und der Zeiger in der Traceaufzeichnung weitergeschaltet.

Beim Erkennen eines Startereignisses (Bit 11 der Ereigniskennziffer ist gleich "0"), für das ein Endereignis existiert, wird beim aktuellen Stackelement 16 in die Variable "break_time_stamp" der Zeitstempel 14 der Traceaufzeichnung übernommen. In der Visualisierung wird ein Breakhinweis dargestellt.

Daraufhin wird der Stackzeiger 18 inkrementiert, so dass dieser jetzt das nächstfolgende Stackelement 16 im Tracestack 17 referenziert. In dieses Stackelement 16 wird die Ereigniskennziffer 13 des erkannten Startereignisses (s.o.) und der aktuelle Zeitstempel 14 eingetragen, also die entsprechenden Werte den Variablen "e_id" und "start_time_stamp" zugewiesen, sowie die Variable "break_time_stamp" mit "0" initialisiert. Für die Visualisierung wird der Start eines Ereignisses dargestellt und die relative Startzeit eingetragen. Bei dieser Verarbeitung ergibt sich, dass das erste Stackelement 16 im Tracestack 17 immer unbenutzt ist. Das erste Stackelement 16 wird initialisiert, indem der Variablen "e_id" der Wert "NIL_E_ID" zugewiesen wird.

Wird das Ende eines Ereignisses erkannt (Bit 11 der Ereigniskennziffer ist gleich "1"), werden folgende Schritte durchgeführt: Der Startzeitstempel ("start_time_stamp") des aktuellen Stackelements 16 wird - unter Berücksichtigung eines evtl. Überschlags - vom Zeitstempel 14 der Traceaufzeichnung subtrahiert, um die nominale Bruttolaufzeit des Ereignisses zu ermitteln. Von der Bruttolaufzeit wird der Wert der Variablen "break_time" subtrahiert. Damit werden mögliche Unterbrechungen des Ereignisses berücksichtigt. Der ermittelte Wert entspricht der Nettolaufzeit des Ereignisses. In der Visualisierung wird das Ende des Ereignisses mit der Brutto- und Nettolaufzeit dargestellt.

Daraufhin wird der Stackzeiger 18 dekrementiert. Bezogen auf die Ereigniskennziffer 13 des Ereignisses, dem das jetzt adressierte Stackelement 16 zugeordnet ist, wird die Unterbrechungszeit ermittelt, indem die Differenz zwischen dem Unterbrechungszeitstempel ("break_time_stamp") des aktuellen Stackelements 16 und dem Zeitstempel 14 der Traceaufzeichnung zum Inhalt der Variablen "break_time" des aktuellen Stackelements 16 hinzuaddiert wird. In der Visualisierung wird die Wiederaufnahme der Bearbeitung (Resume) des Ereignisses dargestellt.

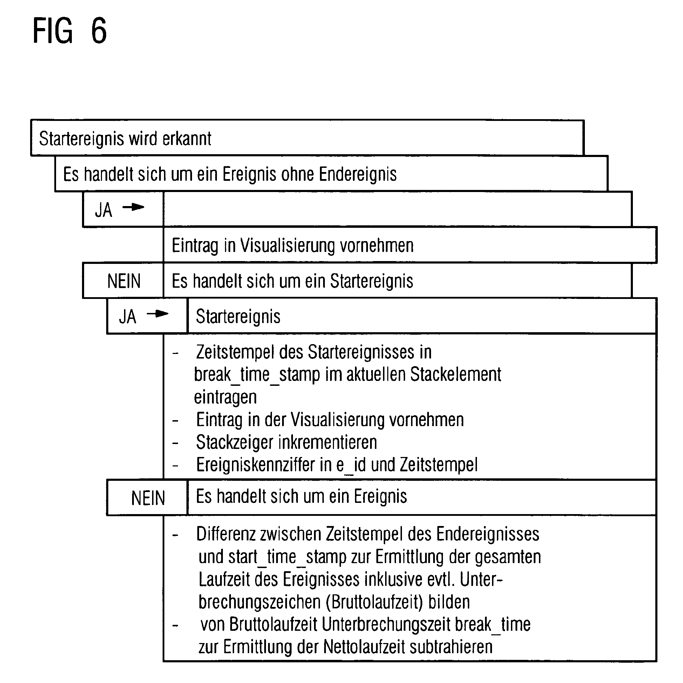

Dieses Verfahren wird in FIG 6 nochmals als vereinfachtes Struktogramm dargestellt.

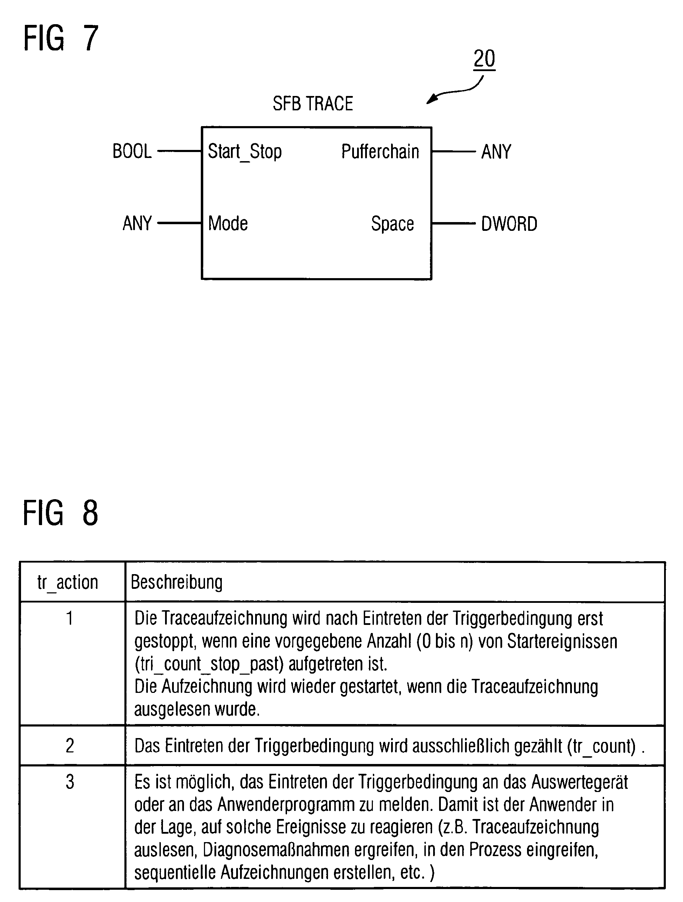

Das oben beschriebene Verfahren kann von einem dafür vorgesehenen Programmmodul, insbesondere einem sog. Systemfunktionsblock (SFB), gestartet oder gestoppt werden. Für die weitere Beschreibung wird dieses Programmmodul als Anwenderbaustein 20 bezeichnet. Ein solcher Anwenderbaustein 20 ist schematisch in FIG 7 dargestellt. Der Anwenderbaustein 20 ist zumindest insoweit Bestandteil des Anwenderprogramms, als der Anwenderbaustein 20 aus dem Anwenderprogramm aufrufbar ist. Der Anwender kann damit aus seinem jeweiligen Steuerungsprogramm (Anwenderprogramm) die Tracefunktionalität starten und stoppen. Darüber hinaus kann er dem Anwenderbaustein 20 Speicherplatz, insbesondere in Form sog. Datenbausteine, zur Verfügung stellen. Der Speicherplatz wird insbesondere für die Traceaufzeichnung, also für den Tracepuffer 10, benötigt. Schließlich kann der Anwender den Aufzeichnungsmodus (Trace-Modus) bestimmen und dabei z. B. Zusatzwerte für bestimmte Funktionen oder Funktionsklassen definieren.

Der Anwender ist also in der Lage, die Traceaufzeichnung genau an den für ihn relevanten Stellen des Steuerungsprogramms zu starten und uninteressante Stellen auszusparen. Die Daten der Traceaufzeichnung liegen als sichtbare Objekte, nämlich insbesondere in Form der Datenbausteine, vor und können mit herkömmlichen Kommunikationsfunktionen ausgelesen werden.

Nachfolgend werden die Parameter oder Eingangssignale des Anwenderbausteins 20 beschrieben:

Start-Stop (BOOL):
Flankengetriggerter Eingang zum Starten (steigende Flanke) und Stoppen (fallende Flanke) der Traceaufzeichnung.

Mode (ANY):
Der Parameter adressiert ein Array von Worten. In dieses Array trägt der Anwender die E-ID ein, die mit Zusatzwerten "getraced" werden (s. Bit 12-15 der Ereigniskennziffer 13). Nach einer einmaligen Auswertung von Mode wird diese Information laufzeitoptimal umgesetzt.

Puffer_Chain (ANY):
Dieser ANY-Pointer beschreibt ein ARRAY of Structur mit den Elementen DB-Nr. (Datenbaustein-Nummer) und DB-Länge (Datenbaustein-Länge). Diese Kette von Datenbausteinen wird vom Anwenderbaustein 20 (SFB TRACE) als ein zusammenhängender Speicher (Tracepuffer 10) betrachtet.

Space (DWORD):
Mit diesem Parameter wird der freie Speicherplatz im Tracepuffer 10 in Byte ausgegeben. Der Anwender kann auf diese Weise rechtzeitig die Daten der Traceaufzeichnung selbst an ein entferntes Auswertegerät senden oder mit einer Meldung ein entferntes Gerät veranlassen, den Tracepuffer 10 auszulesen.

Zur Funktionalität des Anwenderbausteins 20 (SFB TRACE) ist zu erwähnen, dass dieser in einem Anlauf-Operationsbaustein erstmalig aufgerufen wird. Bei diesem Aufruf werden die Datenbausteine erzeugt, die mit dem Parameter "Puffer Chain" (ANY-Pointer) angegeben sind. Diese Datenbausteine können aber durch Anwenderprogrammierung bereits vorhanden sein. Durch Verzeigerung ist es möglich, diese Kette von Bausteinen wie einen zusammenhängenden Speicher zu verwalten. Der Speicher wird für den Tracepuffer 10 verwendet.

Während der Laufzeit des Anwenderprogramms geht es vor allem darum, die Aufzeichnung durch den Anwenderbaustein 20 zu gewünschten Zeitpunkten zu starten oder zu stoppen. Dies erfolgt mittels des Eingangs "Start_Stop". Über den Status des Eingangs "Start_Stop" kann mit einem Pegel "TRUE" die Aufzeichnung gestartet werden. Mit dem Start der Aufzeichnung werden die Modi des Anwenderbausteins 20 ausgewertet. Mit jedem Start und nach jedem Stopp einer Aufzeichnung wird in den Tracepuffer 10 der volle Zeitstempel 14 (E-ID 0x3306) eingetragen. Im Tracepuffer 10 reihen sich somit, geklammert durch die vollen Zeitstempel 14 (E-ID 0x3306 und E-ID 0x3B06), einzelne Trace-Sequenzen aneinander. Wird eine Aufzeichnungssequenz wegen des Umlaufpufferverfahrens teilweise überschrieben, ist die zeitliche Zuordnung durch die jeweilige Ereigniskennziffer (E-ID 0x3B06) immer noch möglich. Durch das Anwenderprogramm gesteuert, lassen sich interessante, selektive Abschnitte des Anwenderprogramms tracen.

Im Gegensatz zur Verwendung des Anwenderbausteins 20 besteht eine weitere Möglichkeit zur Laufzeituntersuchung des Anwenderprogramms darin, die Parameter des Bausteins als Projektierinformation zu hinterlegen. Die Trace-Funktionalität wird mit dem Laden der Projektierdaten gestartet und/oder per interaktiver Bedienung durch ein dafür vorgesehenes entferntes Gerät, z. B. ein Programmiergerät, gestartet und gestoppt. Es bestehen jedoch grundsätzliche Unterschiede zwischen den beiden Lösungen. Zum einen kann bei Verwendung des Anwenderbausteins 20 der Tracepuffer 10 als zusammenhängender Speicher vom Anwender mit dem dynamischen Mengengerüst definiert werden und analog zum Diagnosepuffer Anwenderspeicher belegen. Dieser Speicher kann optimal bearbeitet werden. Zum anderen hat eine reine Projektierungslösung den Nachteil, dass das vom Anwenderprogramm getriebene Starten und Stoppen einer selektiven Traceaufzeichnung nicht möglich oder nur sehr schwer umsetzbar ist. Schließlich ist das Auslesen des Tracepuffers 10 bei einer Projektierungslösung nicht durch allgemeine Kommunikationsmittel möglich. Es bedarf statt dessen einer Systemfunktion.

Die Verwendung des Anwenderbausteins 20 oder die Projektier-lösung ist alternativ oder ergänzend möglich. Darüber hinaus kommt auch ein Stufenkonzept in Betracht. Die reine Anwenderbaustein-Lösung ist partiell in Steuerungen möglich, ohne dass entfernte Geräte, wie z. B. ein Programmiergerät, betroffen wären. Es müsste lediglich eine Lösung zum entfernten Zugriff auf die Daten des Tracepuffers 10 zum Auslesen und zum Darstellen der Daten der Traceaufzeichnung geschaffen werden. Bei einer additiven Projektier-Lösung, unter Beibehaltung eines modifizierten Anwenderbausteins 20, könnte dieser den projektierten Tracepuffer 10 nutzen. Der Anwender könnte Trace-Einträge mit dem Anwenderprogramm steuern. Das Versenden oder Auslesen des Tracepuffers 10 ist dann eine Systemleistung.

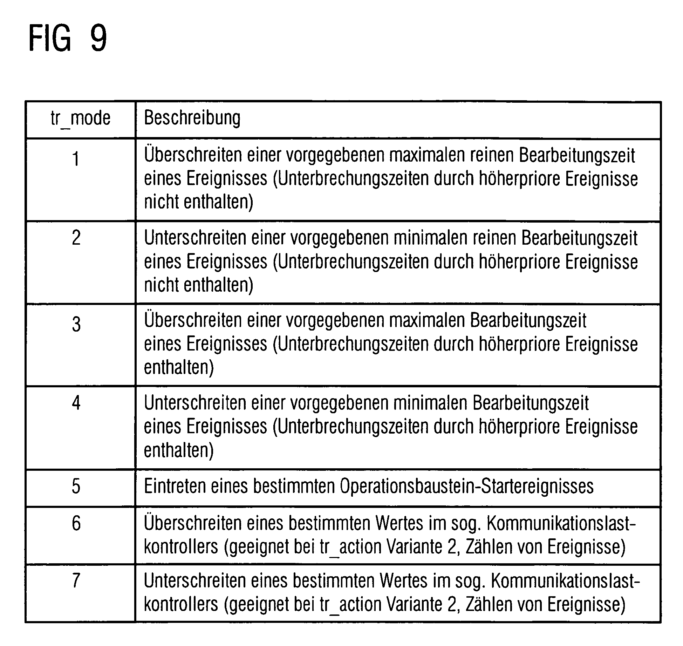

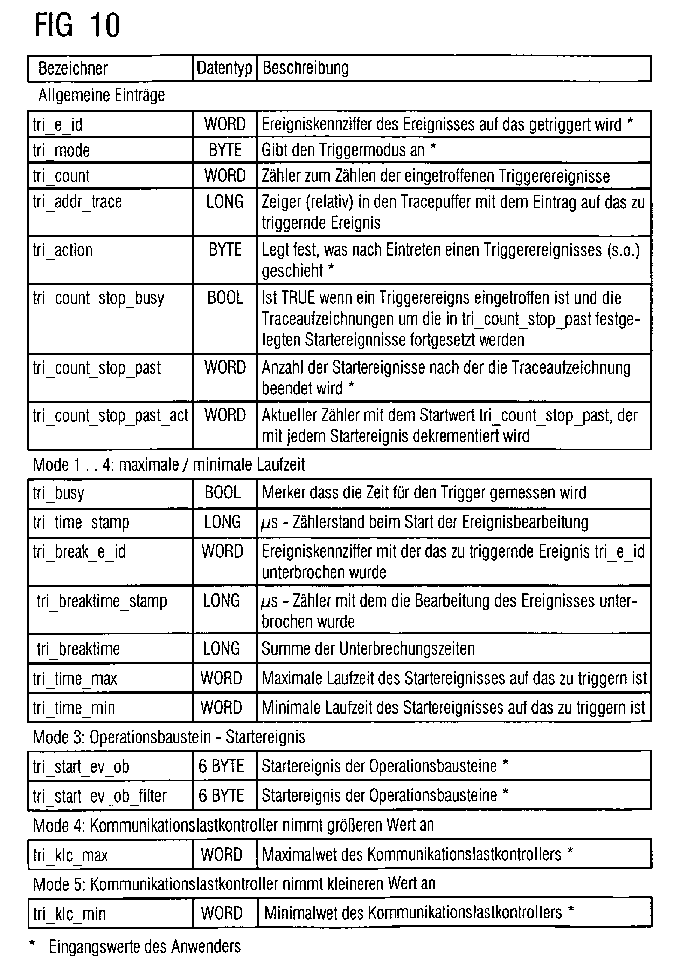

Vorteilhaft ist vorgesehen, dass der Anwender Beginn, Dauer und Ende der Traceaufzeichnung mittels einer Triggerbedingung festlegt. Als Triggerbedingung ("tr_action") kommen u.a. die in der Tabelle in FIG 8 zusammengestellten Bedingungen in Betracht. Jede Triggerbedingung ("tr_action") ist mit einem oder mehreren Triggerkriterien assoziiert. Als Triggerkriterien (tr_mode) sind z. B. die in der Tabelle in FIG 9 zusammengestellten Kriterien sinnvoll. Es sind auch Kombinationen mehrerer Triggerkriterien möglich, z. B. "tr_mode" "1" und "tr_mode" "5" zur Laufzeitüberwachung bei einem bestimmten Startereignis. Hierzu sind die Lösungen zu kombinieren. Zur Umsetzung der Triggerfunktionalität sind die in der Tabelle in FIG 10 zusammengefassten Daten ("tr_info") notwendig.

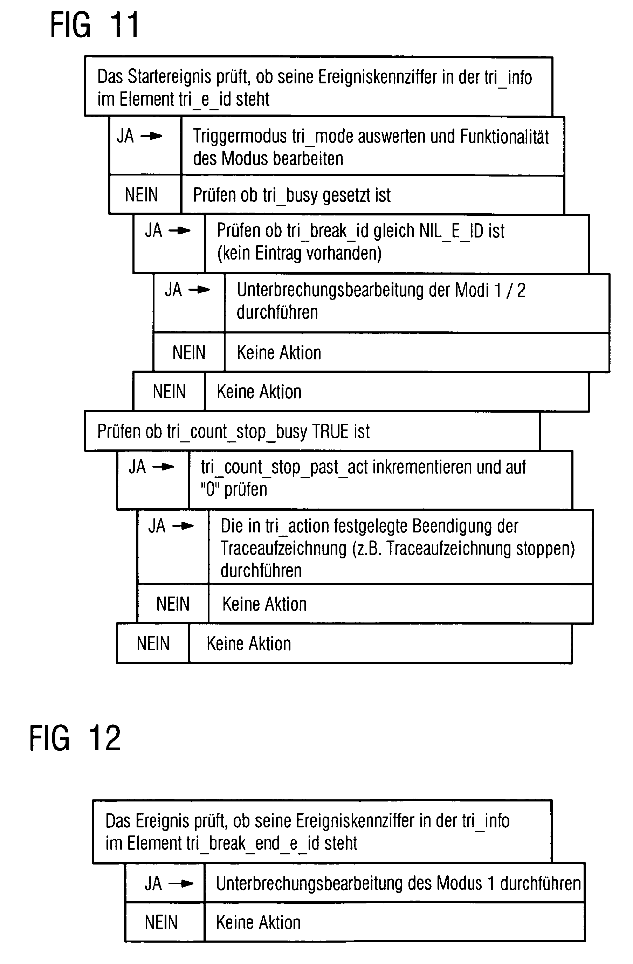

Wird ein Ereignis in den Tracepuffer 10 eingetragen, wird je nach Ereignisart (Start- oder Endereignis) die in FIG 11 bzw. in FIG 12 schematisch in Form eines Struktogramms dargestellte Bearbeitung durchgeführt. Diese Bearbeitung erfolgt bei allen Ereignissen außer bei solchen mit einer Ereigniskennziffer 13 "Justierzeitstempel" oder NIL_E_ID.

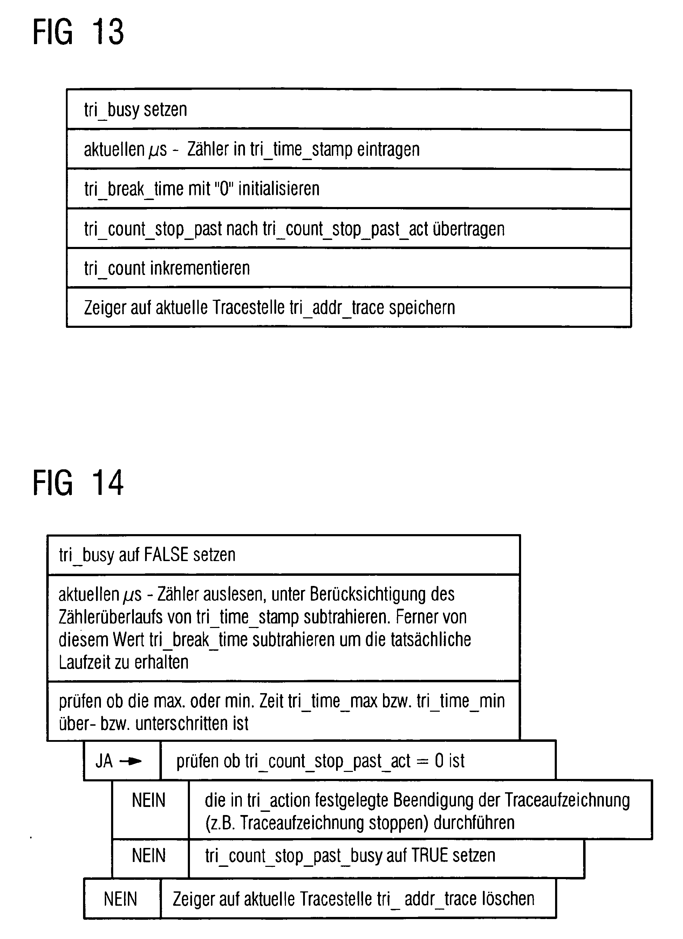

Ob eine Triggerbedingung erfüllt ist oder nicht, also ob z. B. eine vorgegebene Bearbeitungszeit für ein Ereignis über- oder unterschritten ist, kann erst mit dem Ende des jeweiligen Ereignisses festgestellt werden. Dazu werden jeweils beim Start und beim Ende eines Triggerereignisses bestimmte Aktionen ausgelöst, die in FIG 13 bzw. in FIG 14 schematisch in Form eines Struktogramms dargestellt sind.

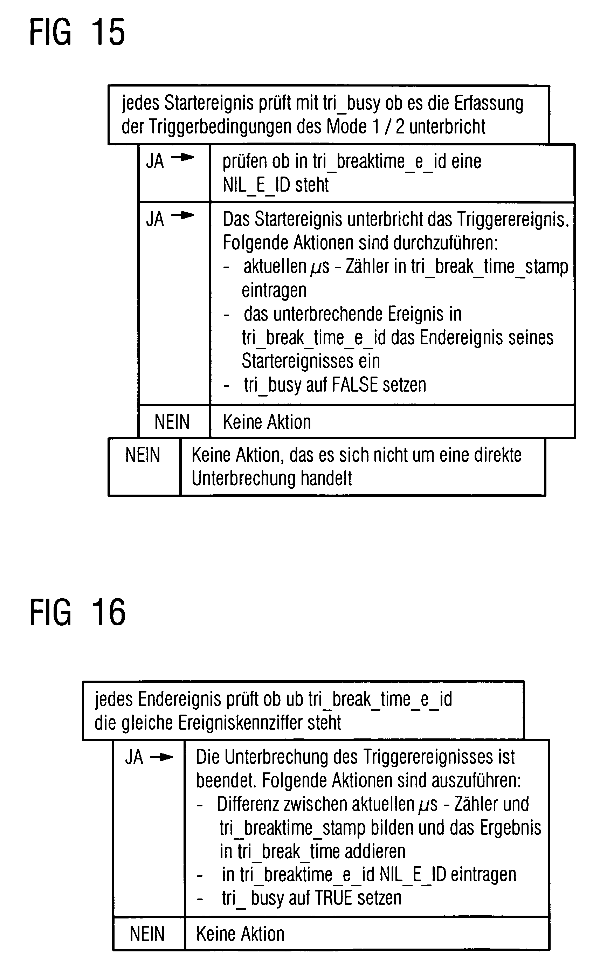

Zur Berechnung der reinen Nettolaufzeit eines Ereignisses, also ohne Berücksichtigung der Laufzeit der Ereignisse, durch die das aktuelle Ereignis selbst unterbrochen wurde, wird für das Startereignis, welches das zu triggernde Ereignis unterbricht, der jeweils aktuelle Zeitstempel gespeichert. Wird das unterbrechende Startereignis beendet, wird die Zeitdifferenz gebildet und auf den "Unterbrechungssaldo" ("start_break_time") addiert. Somit wird die Gesamtunterbrechungszeit gebildet, die bei der Berücksichtigung der reinen Laufzeit des Triggerereignisses berücksichtigt werden kann. Dazu werden jeweils beim Start und beim Ende einer Unterbrechung des Triggerereignisses Aktionen ausgeführt, die schematisch in FIG 15 bzw. FIG 16 in Form eines Struktogramms dargestellt sind.

Die Funktionalität von Mode 3/4 als Eingang des Anwenderbausteins 20 unterscheidet sich von der oben beschriebenen Funktionalität von Mode 1/2 darin, dass die vorgegebene Laufzeit des Triggerereignisses die Unterbrechungszeit enthält. Diese Funktionalität kann mit der Funktion von Mode 1/2 abgedeckt werden. Beim Start des Triggerereignisses ist lediglich das Element "tri_busy" = FALSE zu setzen, anstatt TRUE, wie bei Mode 1/2. Damit unterbleibt die Berechnung der Unterbrechungszeit "tri_break_time", so dass diese Zeit immer bei "0" bleibt. Die berechnete Zeit entspricht somit der Bearbeitungszeit des Triggerereignisses inklusive der Unterbrechungszeiten.

Mit Mode 5 wird das Startereignis des Triggerereignisses mit dem vom Anwender vorgegebenen Startereignis "tri_start_ev_ob" verglichen. Beim Vergleich des Startereignisses werden die Bits nicht verglichen, die in "tri_start_ev_ob_filter" als ausgeblendet gekennzeichnet sind. Wird eine Übereinstimmung festgestellt, wird die in "tr_action" festgelegte Beendigung der Traceaufzeichnung (z. B. Traceaufzeichnung stoppen) durchgeführt.

Mit Mode 6/7 wird eine Über- oder Unterschreitung einer Zeit, die dem Automatisierungsgerät für Kommunikationsaufgaben zur Verfügung steht, festgestellt. Wird eine solche Über- oder Unterschreitung erkannt, wird die in "tr_action" festgelegte Beendigung der Traceaufzeichnung (z. B. Eintreten des Triggerereignisses zählen) durchgeführt.

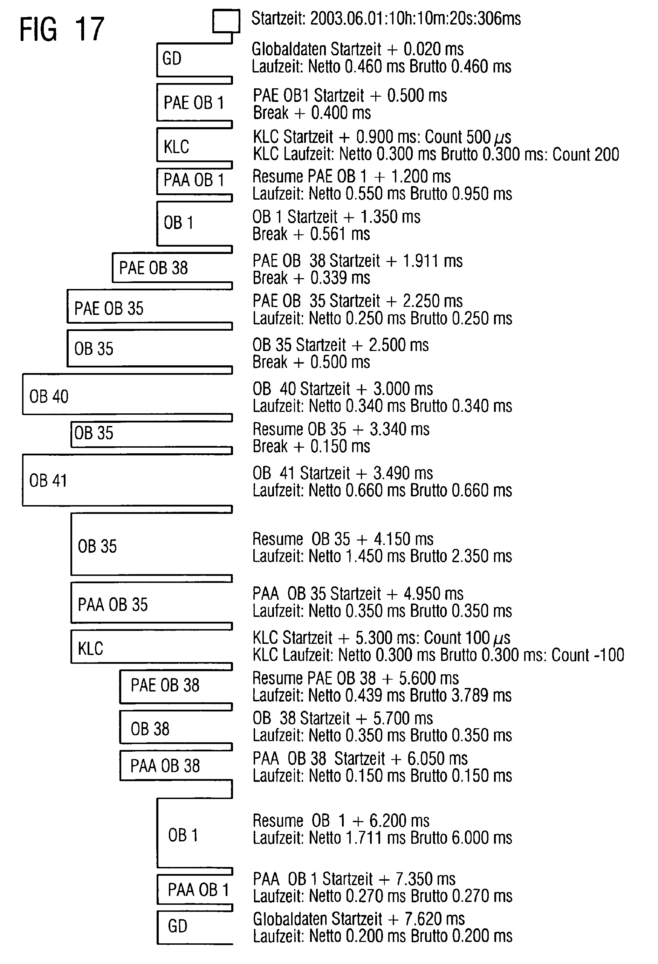

FIG 17 zeigt exemplarisch eine Visualisierung als Ergebnis einer Auswertung des Tracepuffers 10. Unterbrechungen des zentralen Operationsbausteins "OB1" sind einfach eingerückt dargestellt. Werden diese Unterbrechungsereignisse selbst unterbrochen, ist eine zweifach eingerückte Darstellung vorgesehen. Werden auch diese Unterbrechungsereignisse selbst unterbrochen, wird dies durch eine dreifache Einrückung dargestellt, usw. Durch die eingerückte Darstellung lässt sich die Struktur der Unterbrechungen besonders schnell erfassen.

Zusammenfassend lässt sich die vorliegende Erfindung kurz wie folgt beschreiben:

Es wird ein Verfahren zum Betrieb eines Automatisierungsgerätes angegeben, bei dem während der Abarbeitung eines Anwenderprogramms, das eine Mehrzahl von Operationsbausteinen, darunter einen zentralen Operationsbaustein, umfasst, in einen Tracepuffer 10 beim Beginn und beim Ende jeder Unterbrechung des zentralen Operationsbausteins der Zeitstempel 14 und eine Ereigniskennziffer 13 eingetragen werden, wobei die Ereigniskennziffer 13 das Ereignis, das die Ausführung des zentralen Operationsbausteins unterbricht, kennzeichnet, so dass anhand der Daten im Tracepuffer 10 eine vollständige Rekonstruktion des Eintretens und der Dauer von Unterbrechungsereignissen möglich ist, wobei diese Daten für eine Visualisierung graphisch aufbereitet werden, so dass schnell erfassbar ist, aus welchem Grund Ausnahmesituationen bei der Abarbeitung des Anwenderprogramms, wie z. B. eine Zykluszeitüberschreitung, auftreten.

## Patentansprüche

1. Verfahren zum Betrieb eines Automatisierungsgerätes,
wobei während der Abarbeitung eines Anwenderprogramms, das eine Mehrzahl von Operationsbausteinen, darunter einen zentralen Operationsbaustein, umfasst, in einen Tracepuffer (10) für jede Unterbrechung des zentralen Operationsbausteins ein Zeitstempel (14) eingetragen wird,
**dadurch gekennzeichnet, dass**
in den Tracepuffer (10) beim Beginn und beim Ende jeder Unterbrechung des zentralen Operationsbausteins der Zeitstempel (14) und eine Ereigniskennziffer (13) eingetragen werden, wobei die Ereigniskennziffer (13) das Ereignis, das die Ausführung des zentralen Operationsbausteins unterbricht, kennzeichnet.

2. Verfahren nach Anspruch 1,
wobei zur Auswertung des Inhalts des Tracepuffers (10) ein Tracestack (17) mit einer Anzahl von Stackelementen (16) vorgesehen ist.

3. Verfahren nach Anspruch 2,
wobei ein aktuelles Stackelement (16) des Tracestacks (17) durch einen Stackzeiger (18) referenziert wird,
wobei bei der Auswertung des Inhalts des Tracepuffers (10) beim Erkennen des Starts eines Unterbrechungsereignisses der Zeitstempel (14) aus dem Tracepuffer (10) für das aktuelle Stackelement (16) und nach Inkrementieren des Stackzeigers (18) für das nachfolgende Stackelement (16) verwendet wird.

4. Verfahren nach Anspruch 3,
wobei bei der Auswertung des Inhalts des Tracepuffers (10) beim Erkennen des Endes eines Unterbrechungsereignisses der Zeitstempel (14) aus dem Tracepuffer (10) für das aktuelle Stackelement (16) zur Ermittlung der Dauer des Unterbrechungsereignisses, dessen Ende im Tracepuffer (10) erkannt wurde, verwendet wird.

5. Verfahren nach Anspruch 3,
wobei der Start eines Unterbrechungsereignisses an einem charakteristischen Bestandteil der jeweiligen Ereigniskennziffer (13) erkannt wird.

6. Verfahren nach Anspruch 4,
wobei das Ende eines Unterbrechungsereignisses an einem charakteristischen Bestandteil der jeweiligen Ereigniskennziffer (13) erkannt wird.

7. Verfahren nach Anspruch 5 oder 6,
wobei der charakteristische Bestandteil der jeweiligen Ereigniskennziffer (13) ein bestimmtes Bit der Ereigniskennziffer (13) ist und wobei ein erster Wert dieses Bits ein Startereignis und ein komplementärer zweiter Wert dieses Bits ein Ereignisende kennzeichnet.

8. Verfahren nach Anspruch 3,
wobei beim Erkennen des Starts eines Unterbrechungsereignisses der Zeitstempel (14) aus dem Tracepuffer (10) für das aktuelle Stackelement (16) in eine Variable zur Protokollierung des Unterbrechungszeitpunktes ("break_time_stamp") und nach Inkrementieren des Stackzeigers (18) für das nachfolgende Stackelement (16) in eine Variable zur Protokollierung des Startzeitpunkts des Unterbrechungsereignisses ("start_time_stamp") übertragen wird.

9. Verfahren nach Anspruch 4,
wobei beim Erkennen des Endes eines Unterbrechungsereignisses der Zeitstempel (14) aus dem Tracepuffer (10) vom Inhalt der Variablen zur Protokollierung des Startzeitpunkts ("start_time_stamp") des aktuellen Stackelements (16) zur Ermittlung der Dauer des Unterbrechungsereignisses subtrahiert wird.

10. Verfahren nach Anspruch 8,
wobei beim Erkennen des Starts eines Unterbrechungsereignisses im jeweiligen Stackelement (16) eine Variable zur Protokollierung der Gesamtdauer des Unterbrechungsereignisses ("break_time") initialisiert wird.

11. Verfahren nach Anspruch 9,
wobei bei der Subtraktion der Wert des Inhalts der Variablen zur Protokollierung der Gesamtdauer des Unterbrechungsereignisses ("break_time") berücksichtigt wird.

12. Verfahren nach Anspruch 11,
wobei nach der Subtraktion der Stackzeiger (18) dekrementiert wird und bezüglich des dann durch den Stackzeiger (18) referenzierten Stackelements (16) zum Inhalt der Variablen zur Protokollierung der Gesamtdauer des Unterbrechungsereignisses ("break_time") die Differenz zwischen dem Inhalt der Variablen zur Protokollierung des Startzeitpunkts ("start_time_stamp") und dem Zeitstempel (14) im Tracepuffer (10) addiert wird.

13. Verfahren nach einem der vorangehenden Ansprüche,
wobei die Traceaufzeichnung automatisch fortgesetzt wird, nachdem die Traceaufzeichnung ausgelesen wurde.

14. Verfahren nach einem der vorangehenden Ansprüche,
wobei die Traceaufzeichnung in Sequenzen aufgeteilt ist und
wobei jede Sequenz mit einem vollen Zeitstempel beginnt und/oder endet, wobei der oder jeder volle Zeitstempel anhand seiner Ereigniskennziffer (13) eindeutig identifizierbar ist.

15. Verfahren nach einem der vorangehenden Ansprüche,
wobei Beginn, Dauer und Ende der Traceaufzeichnung mittels einer Triggerbedingung und/oder einem oder mehreren Triggerkriterien festgelegt werden kann.
